# EUROPEAN PATENT APPLICATION

(11) **EP 2 884 577 A1**
(43) Date of publication of application: **17.06.2015**
(21) Application number: 14762699.8
(22) Date of filing: 07.03.2014
(51) Int. Cl.: H01M 10/60, F28D 15/02, H01M 2/10

(54) **TEMPERATURE ADJUSTMENT DEVICE AND BATTERY EQUIPPED WITH SAME**

(30) Priority: 14.03.2013 JP 2013051593
(71) Applicant: Furukawa Electric Co., Ltd., Chiyoda-ku Tokyo 100-8322 (JP)
(72) Inventor: HIRASAWA Takeshi, Tokyo 100-8322 (JP); SASAKI Chiyoshi, Tokyo 100-8322 (JP); IKEDA Masami, Tokyo 100-8322 (JP); MURATA Takashi, Toyota-shi Aichi 471-8571 (JP)
(74) Representative: Weickmann & Weickmann
(86) International application number: PCT/JP2014/056007
(87) International publication number: WO 2014/142033

(57) **Abstract**

Temperature adjusting apparatus enabling a temperature adjustment of the battery at low cost is provided.

A temperature adjusting apparatus for a battery including a plurality of battery cells, includes at least two interposing members each having an interposing portion disposed between the battery cells and a protruded portion disposed to protrude from between the battery cells, the interposing portion being thermally connected with the battery cells, and a heat transport member joined to at least two of the protruded portions, the heat transport member being thermally connected to the at least two protruded portions.

## Description

### Technical Field

The present disclosure relates to a temperature adjusting apparatus suitable for, for example, a module constituted by assembling battery cells such as lithium ion secondary batteries, and a battery having the same.

### Background Art

When a secondary battery such as a lithium-ion battery is discharged at a high output power, an amount of heat generation increases. In such a case, the battery needs to be cooled to be operated in an operation allowable temperature range. Also, in a secondary battery in which a large number of electric cells (battery cells) are electrically connected in series-parallel to constitute a module, it is necessary to equalize the temperature distribution in the module in order to make ratios of an amount of discharge electricity to the rated capacity of the respective electric cells equal.

In order to cool the secondary battery to achieve a uniform temperature distribution, it is proposed to equalize the temperature distribution in the module by a heat equalizing unit such as a heatpipe and to cool the heatpipe by a heat dissipation plate outside the module. For example, patent document 1 discloses an invention in which a plurality of cylindrical heatpipes are disposed in a vertical direction in a battery main body with one end of each of the heatpipes being made to protrude outside the battery main body and further a heat dissipation plate is attached to protruded portions of the heatpipes, to thereby equalize the temperature by causing the heat of the heatpipes in the battery main body to be transmitted to the heat dissipation plate and dissipated outside.

### Document List

### Patent Document(s)

Patent Document 1: Japanese Laid-Open Patent Publication No. H7-45310

### Summary of Invention

### Technical Problem

According to the technique claimed in Patent Document 1, heat pipes are attached to a side surface of the battery cell and thus thermal contact may become poor when they are not aligned with the side surface of the cell. Also, there is a problem of an increased cost, since a flattened (plate-like) heatpipe needs to be used to increase a contact area between the cell and the heatpipe.

Thus, it is an object of the present disclosure to provide a temperature adjusting apparatus that can adjust the temperature of the battery at a low cost.

### Solution to Problem

In order to achieve the above object, the present disclosure employs the following configuration.

### [Temperature Adjusting Apparatus]

### Configuration 1:

A temperature adjusting apparatus for a battery including a plurality of battery cells, the temperature adjusting apparatus including:
at least two interposing members each having an interposing portion disposed between the battery cells and a protruded portion disposed to protrude from between the battery cells, the interposing portion being thermally connected with the battery cells; and
a heat transport member joined to at least two of the protruded portions, the heat transport member being thermally connected to the at least two protruded portions.

### Configuration 2:

The temperature adjusting apparatus as described above, wherein the interposing portion and the protruded portion are constituted by separate members and are thermally joined.

### Configuration 3:

The temperature adjusting apparatus as described above, wherein the interposing member is made of metal.

### Configuration 4:

The temperature adjusting apparatus as described above, wherein the heat transport member is constituted by a heatpipe.

### Configuration 5:

The temperature adjusting apparatus as described above, wherein the heat transport member is constituted by a plurality of heat pipes connected along a heat transport path.

### Configuration 6:

The temperature adjusting apparatus as described above, wherein a heating unit and/or a cooling unit is thermally connected to the heat transport member.

### [Battery Having a Temperature Adjusting Apparatus]

A battery having a temperature adjusting apparatus described in any one of the above.

### Advantageous Effects of Invention

According to the present disclosure, the temperature of the battery can be adjusted at low cost.

### Brief Description of Drawings

[Fig. 1] FIG. 1 is a perspective view showing an example of an embodiment of a battery having a temperature adjusting apparatus (battery having a temperature adjusting apparatus) of the present disclosure.
[FIG. 2] FIG. 2 is a partial exploded view showing an example of an embodiment of a battery having a temperature adjusting apparatus (battery having a temperature adjusting apparatus) of the present disclosure.
[FIG. 3] FIG. 3 is a perspective view showing an example of an embodiment of an interposing member.
[FIG. 4] FIGS. 4A to 4C are perspective views showing an example of an embodiment of an interposing member according to a variant.
[FIG. 5] FIGS. 5A and 5B are diagrams showing a configuration of a heat transport member.
[FIG. 6] FIG. 6 is a perspective view showing another example of an embodiment of a battery having a temperature adjusting apparatus (battery having a temperature adjusting apparatus) of the present disclosure.

### Description of the Preferred Embodiments

Hereinafter, the present disclosure will be described in line with an embodiment in detail.

### [Embodiment 1]

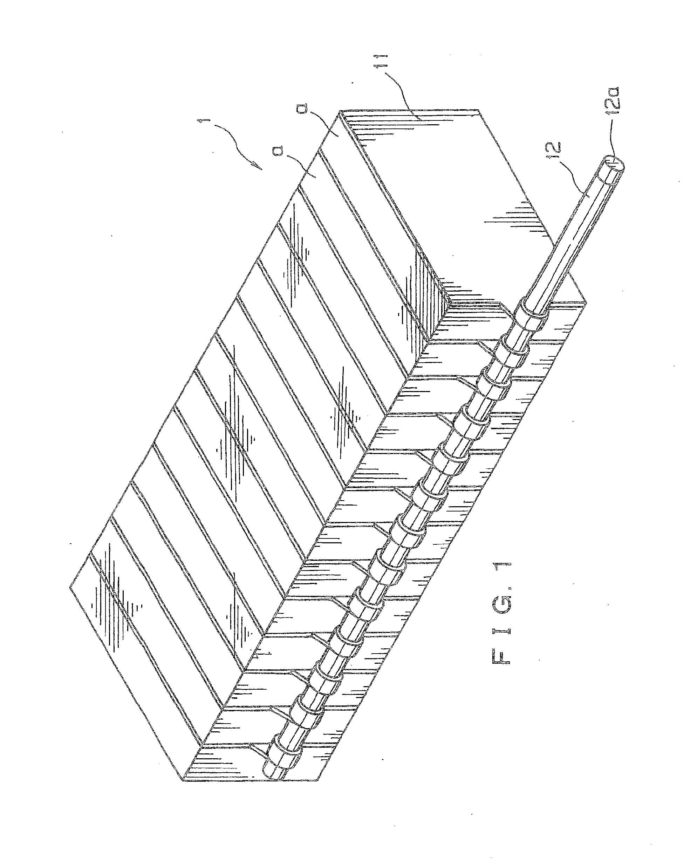

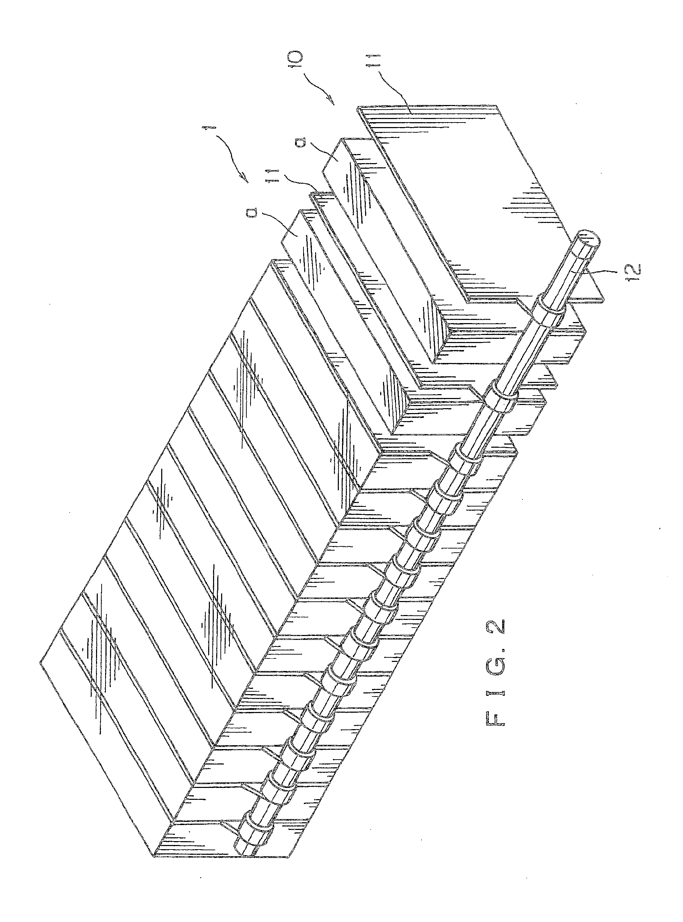

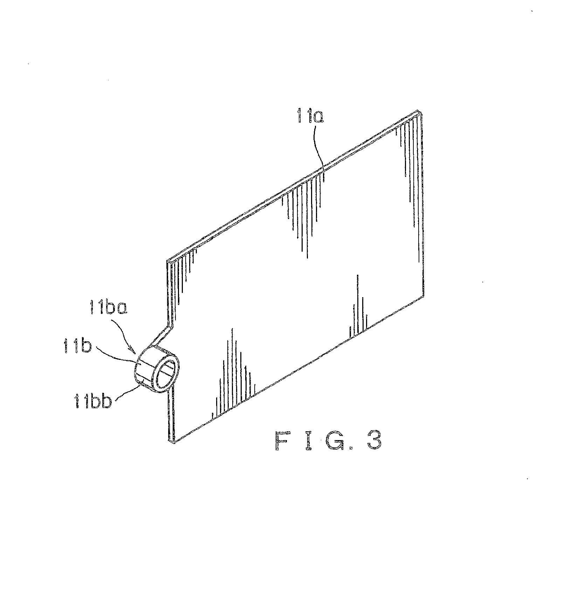

FIG. 1 is a perspective view showing a battery having a temperature adjusting apparatus of the present disclosure, and FIG. 2 is a partial exploded view showing a battery having a temperature adjusting apparatus of the present disclosure. FIG. 3 is a perspective view showing an interposing member used in the temperature adjusting apparatus of FIGS. 1 and 2.

A battery having a temperature adjusting apparatus 1 includes a plurality of battery cells "a" that are arranged to align and a temperature adjusting apparatus 10. In the present embodiment, each of the battery cells "a" is prismatic.

The temperature adjusting apparatus 10 includes an interposing member 11 and a heat transport member 12. As shown in FIG. 3, the interposing member 11 includes an interposing portion 11a that is disposed between the battery cells "a" and a protruded portion 11b that is constituted so as to protrude from between the battery cells "a".

In this example, the interposing portion 11a has a flat plate-shape, and can be disposed in close contact with a side surface of the battery cell "a". The protruded portion 11b includes an insertion hole 11ba and a flange (burring) 11bb formed on the periphery of the insertion hole 11ba. The flange 11bb provides an increased contact area with a heat transport member to be described below, and thus heat transport efficiency improves. The material of the interposing member 11 is not particularly limited, as long as it has good heat transport efficiency. However, considering a load bearing property, it is preferably made of metal. The metal used may be various metals such as aluminum, copper, and iron. However, considering the lightweighting of the apparatus, it is preferable to use aluminum. The interposing member 11 is preferably provided with an insulation property, and for this purpose, preferably coated with an insulating substance such as a resin. The resin is not particularly limited, as long as it has an insulation property. However, for example, polyethylene terephthalate (PET) may be a preferable material.

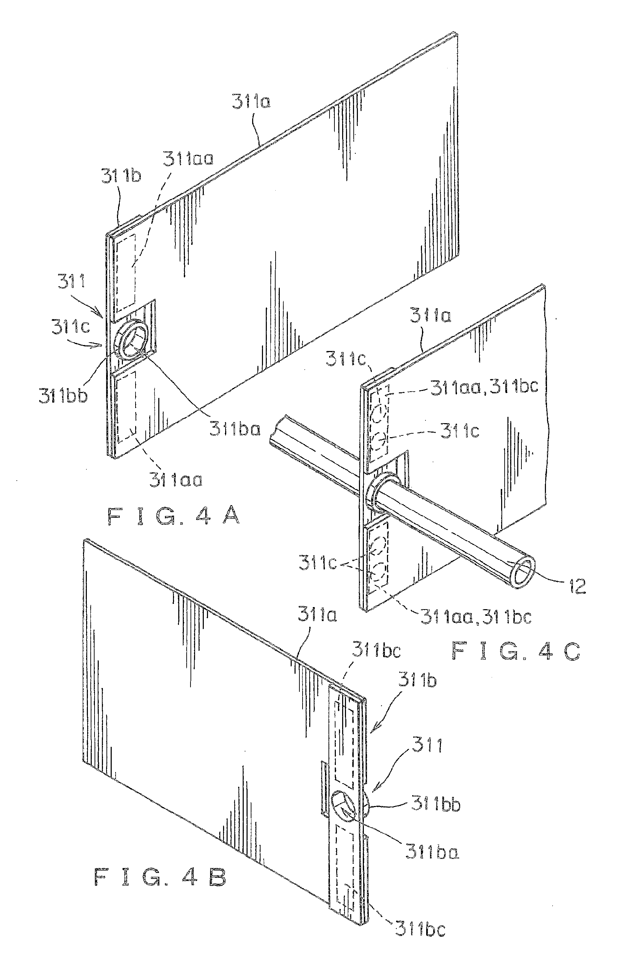

Note that, the structure of the interposing member is not limited to the one shown in FIG. 3, and those of various shapes can be used. Specifically, the interposing member 311 of variants as shown in FIG. 4A and FIG. 4B may be used. That is, the interposing member 311 includes an interposing portion 311a and a protruded portion 311b that are separate members. The interposing portion 311a has a flat plate-shape that can be disposed in close contact with a side surface of the battery cell "a" and has a joining surface 311aa that can be joined with the protruded portion 311b. The protruded portion 311b has an insertion hole 311ba and a flange (burring) 11bb formed on the periphery of the insertion hole 311ba, as well as a joining surface 311bc that can be joined with the interposing portion 311a. The joining surface 311aa and the joining surface 311bc are, for example, spot-welded at a total of four welding marks 311c as shown in FIG. 4C to join the interposing portion 311a and the protruded portion 311b.

By using the interposing member 311 of the aforementioned structure, since the interposing portion 311a can be disposed between the battery cells "a" in advance when arranging the battery cells "a", the assembling is facilitated. By adjusting the position of the protruded portion 311b which is a member separate from the interposing portion 311a, variation in the position due to the size of the battery cell "a" or the like can be absorbed. Therefore, the insertion hole 311ba, which serves as a joining portion with the heat transport member 12 at which heat concentrates and has a great influence on a thermal performance of the entire temperature adjusting apparatus 10, can be secured, and the thermal joining between the interposing member 311 and the heat transport member 12 can be ensured.

Note that, as long as the protruded portion 311b and the interposing portion 311a can be thermally joined, the joining surface 311aa of the interposing portion 311a and the joining surface 311bc of the protruded portion 311b may be joined not only by spot welding as described above, but also by securing by soldering, brazing and caulking, or joined with an adhesive.

The heat transport member 12 is connected to each interposing member 11 in a thermally connected state by being inserted into the insertion hole 11ba provided in the protruded portion 11b. In order to achieve a sufficient connection between the heat transport member 12 and the insertion hole 11ba, a thermally-conductive member such as a thermal sheet may be interposed between the insertion hole 11ba and the heat transport member 12 as appropriate. Also, it is not necessarily required to physically secure the heat transport member 12 and the insertion hole 11ba, but these can be secured by solder or the like. The heat transport member 12 is not particularly limited as long as it is a member having a good heat transport ability, but it is particularly preferable to use a heatpipe. The heat transport member 12 may be, for example, at an end portion 12a thereof, thermally connected to a heating mechanism such as a heater and/or a cooling mechanism such as fins serving as a temperature adjustment mechanism. In this example, it is assumed that the temperature adjustment device such as a heater is thermally connected to the end portion 12a of the heat transport member 12. However, various configurations are possible, such as, for example, thermally connecting a heating mechanism other than hot air (e.g., an electric heater) to the end portion 12a of the heat transport member 12 and provide a fin on the another end thereof. In such a case, the fin provided at the other end may only be used to release heat of the battery, or the fin may be exposed to hot air supplied by an air-conditioning system in the automobile interior or the like to perform combined heating by a heating mechanism other than hot air and by hot air. In a case where the heat transport member 12 is used only for the purpose of equalizing the temperature distribution inside the battery, a temperature adjusting mechanism need not be necessarily connected to the heat transport member 12.

The heat pipe includes, for example, a sealed container made of a metal having good thermal conductivity, such as copper and aluminum, or an alloy of such a metal, and an operating fluid enclosed in the sealed container in a depressurized state. The shape of the container may be, in addition to a shape having a substantially rectangular cross section of the present embodiment, a shape having a flattened cross section, a round shape, a plate shape, or the like. The heat pipe may be of a type having a wick formed on an inner surface of the container with a mesh or a coil of a metal wire or a porous metal, and of a type having grooves formed on an inner surface of the container. A space serving as a channel for the operating fluid is also provided inside the heat pipe. Heat transportation is performed by a phase change between evaporation (heat receiving section) and condensation (heat radiating section) and an internal movement of the operating fluid contained in this space. The operating fluid includes, but not limited to, water, hydrochlorofluoro carbons such as HCFC-22, hydrofluorocarbons such as HFCR134a, HFCR407C, HFCR410A and HFC32, hydrofluoroolefins such as HFO1234yf, carbon dioxide gas, ammonia and propane. Among these, taking the performance and influences on global environment into consideration, water, carbon dioxide gas, and hydrofluoroolefin are preferable.

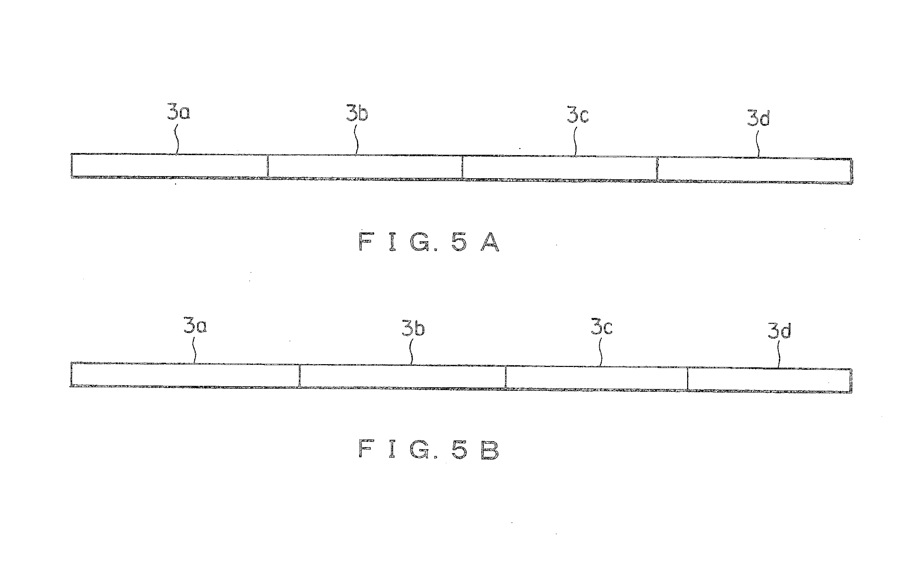

When a heatpipe is used as the heat transport member 12, it is preferable to connect a plurality of heat pipes along a heat transport direction A as shown in FIGS. 5A and 5B.

According to the example shown in FIGS. 5A and 5B, since a plurality of (in this embodiment, a total of four) heat pipes 3 are thermally connected along the heat transport direction A, a decrease in the heat transport efficiency due to the freezing of the heat pipe can be prevented as compared to a case in which heat is transported using a single long heat pipe. That is, in a case of a short heat pipe, even in a situation where the operating fluid might freeze (e.g., in a situation where the usage temperature is 0 °C or below when water is the working fluid), since heat conduction takes place in the container and at the wick portion, the freezing of the operating fluid can be prevented by the heating. Also, since a plurality of short heat pipes are thermally connected, heat pipes that are far from the heat source can be operated and heat can be transported over a long-distance. In addition to a heat pipe that is not frozen, such an effect is also effective to a heat transport path that is already frozen. Since short heat pipes are thawed by heat conduction of the container and the wick portion and restore the function, heat can be transferred well to the next heat pipe in the heat transport direction. Since the function of the heat pipe recovers in turn, a good heat transport is finally restored in the entire path. Taking such a freezing problem into consideration, each of the heat pipes 3 has a length of preferably less than or equal to 50 cm, particularly preferably less than or equal to 40 cm, and further preferably less than or equal to 30 cm.

In a case where a cooling mechanism (e.g., a water-cooling jacket or a fin as a part of a water-cooled system) is connected to a heat pipe as a temperature adjustment mechanism, the heatpipe 3a constituting one end of the heat transport path is made to have the longest length, the heatpipe 3d nearest to the cooling mechanism is made to have the shortest length, and the heatpipes constituting an intermediate part is configured in such a manner that, when viewed along from the one end side to the other end side, adjacent heat pipes have the same lengths or the lengths of at least a part of the heat pipes gradually decrease as shown in FIG. 5B. Note that, in the example shown in FIG. 5A, the length of the heatpipe is in the order of 3a> 3b> 3c> 3d. The shorter the length, the higher the heat transport efficiency of the heatpipe. On the other hand, the nearer to the cooling mechanism, the greater the total amount of heat moving in the heat transport path becomes, and thus effective heat transport can be performed by employing such a configuration.

Note that, in the above example, a case in which the working fluids of the heatpipes are the same was assumed and described, but heatpipes containing different working fluids may be used in combination.

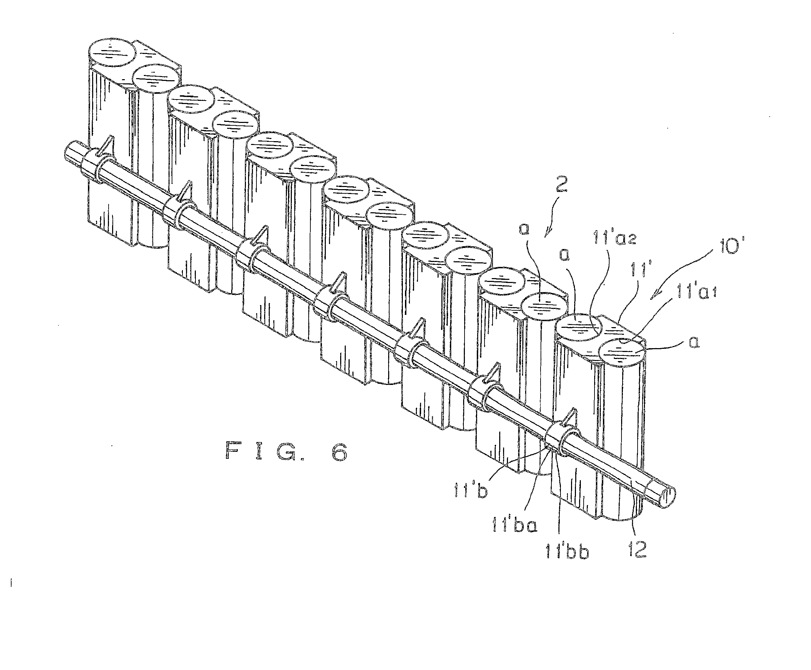

Note that, in the above example, a case in which a battery cell of a prismatic shape was exemplified as the battery cell, but in the present disclosure, the shape of the battery cell is not limited to such a prismatic shape. Specifically, for example, it can be adapted to a cylindrical battery cell as shown in FIG. 6.

A temperature adjusting apparatus 10' shown in FIG. 6 includes both the interposing member 11' and the heat transport member 12. The interposing member 11' includes an interposing portion 11'a disposed between the battery cells "a" and a protruded portion 11'b that is configured to project out of the interval between the battery cells "a". In this example, recessed portions 11'a1 and 11'a2 are provided in both side surfaces of the interposing portion 11'a in accordance with the shape of the battery cell "a". By these recessed portions 11'a1 and 11'a2, the interposing member 11' and the side surface of the battery cell "a" can be disposed in close contact. The protruded portion 11'b includes an insertion hole 11'ba and the flange (burring) 11'bb formed circumferentially thereof.

### List of Reference Signs

- 1: battery having temperature adjusting apparatus
- 10: temperature adjusting apparatus
- 11: interposing member
- 11a: interposing portion
- 11b: protruded portion
- 11ba: insertion hole
- 11bb: flange
- 12: heat transport member

## Claims

1. A temperature adjusting apparatus for a battery including a plurality of battery cells, the temperature adjusting apparatus comprising:
at least two interposing members each having an interposing portion disposed between the battery cells and a protruded portion disposed to protrude from between the battery cells, the interposing portion being thermally connected with the battery cells; and
a heat transport member joined to at least two of the protruded portions, the heat transport member being thermally connected to the at least two protruded portions.

2. The temperature adjusting apparatus according to claim 1, wherein the interposing portion and the protruded portion are constituted by separate members and are thermally joined.

3. The temperature adjusting apparatus according to claim 1 or 2, wherein the interposing member is made of metal.

4. The temperature adjusting apparatus according to any one of claims 1 to 3, wherein the heat transport member is constituted by a heatpipe.

5. The temperature adjusting apparatus according to claim 4, wherein the heat transport member is constituted by a plurality of heat pipes connected along a heat transport path.

6. The temperature adjusting apparatus according to any one of claims 1 to 5, wherein a heating unit and/or a cooling unit is thermally connected to the heat transport member.

7. A battery having a temperature adjusting apparatus, the temperature adjusting apparatus being claimed in any one of claims 1 to 6.
